## Europäisches Patentamt
### European Patent Office
### Office européen des brevets

(11) Veröffentlichungsnummer: **0 289 717**
**A2**

(12) **EUROPÄISCHE PATENTANMELDUNG**

(21) Anmeldenummer: 88102464.0

(22) Anmeldetag: 19.02.88

(51) Int. Cl.4: **F24D 11/02 , F24J 3/08**

(30) Priorität: 04.05.87 PL 265491

(43) Veröffentlichungstag der Anmeldung:
· 09.11.88 Patentblatt 88/45

(84) Benannte Vertragsstaaten:
**BE DE FR GB**

(71) Anmelder: **INSTYTUT TECHNIKI BUDOWLANEJ**
**ul. Filtrowa**
**Warszawa(PL)**

(72) Erfinder: **Weglarz, Marian**
**Warszawa**
**ul. Asfaltowa 11 m 18(PL)**

(74) Vertreter: **Finck, Dieter et al**
**Patentanwälte v. Füner, Ebbinghaus, Finck**
**Mariahilfplatz 2 & 3**
**D-8000 München 90(DE)**

(54) Verfahren und System zur Ausnutzung der in der Luft einer arbeitenden Grube enthaltenen Niedrigtemperaturwärmeenergie.

(57) Das Verfahren zur Ausnutzung der in der Luft einer arbeitenden Grube enthaltenen Niedrigtemperaturwärmeenergie besteht darin, daß die Luft über Schleppschächte und Wetterquerschläge zum Abwetterschacht der Grube geleitet wird, von welchem die Niedrigtemperaturwärme durch eine Wärmepumpe entnommen und mit erhöhter Temperatur zum Verbraucher über einen Wärmeakkumulationsspeicher und eine Wärmeverteilung übertragen wird.

Das System zur Ausnutzung der in der Luft einer arbeitenden Grube enthaltenen Niedrigtemperaturwärmeenergie ist dadurch gekennzeichnet, daß die Schleppschächte und die Wetterquerschläge (1) und der Abwetterschacht (2) mit der Wärmepumpe (3) und dem Wärmeverbraucher (6) über einen Wärmeakkumulationsspeicher (4) und eine Wärmeverteilung (5) verbunden sind, die durch Leitungen im geschlossenen Kreislauf verbunden sind.

Verfahren und System zur Ausnutzung der in der Luft einer arbeitenden Grube enthaltenen Niedrigtemparaturwärmeenergie

Die Erfindung betrifft ein Verfahren und ein System zur Ausnutzung der in der Luft einer arbeitenden Grube enthaltenen Niedrigtemperaturwärmeenergie.

Die Erfindung findet bei der Beheizung von Räumen, insbesondere von Wohnräumen, sowie zum Erwärmen von Brauchwasser Anwendung.

Es sind Verfahren zur Ausnutzung der Wärmeenergie aus geringen Tiefen, z.B. aus dem Bodengrund mit Wintertemperaturen von 277 K bis 278 K, aus Grundwasser bei ca. 20 m Tiefe mit einer Wintertemperatur von ca. 282 bis 283 K usw. bekannt. Diese Verfahren bestehen in der Anordnung von Wärmetauschern auf geringer Tiefe im Bodengrund, was z.B. in der polnischen Patentschrift Nr. 119749 beschrieben ist.

Außerdem stellt die westdeutsche Patentschrift Nr. 2928893 die Beheizung eines Wohnhauses mit der Wärmeenergie aus dem Bodengrund vor.

Auch die Patentschrift der USA Nr. 4448238 stellt ein System zur Ausnutzung der geothermischen Wärme vor. Die bekannten Lösungen eignen sich nicht zur Ausnutzung der geothermischen Wärme der Gruben.

Das Ziel der Erfindung ist es, ein Verfahren und ein System zur Ausnutzung der Niedrigtemperaturwärmeenergie aus einer arbeitenden Grube zur Beheitung von Bauobjekten zu entwickeln.

Das erfindungsgemäße Verfahren zur Ausnutzung der in der Luft einer arbeitenden Grube enthaltenen Niedrigtemperaturwärmeenergie ist dadurch gekennzeichnet, daß die Luft über Schleppschächte und Wetterquerschläge zum Abwetterschacht der Grube geleitet wird, dessen Auslauf über Leitungen mit einem Wärmeverbraucher über eine Wärmepumpe verbunden ist, in welcher die Wärmentnahme aus der Luft und derer Übertragung zum Wärmeakkumulationsspeicher und dann zur Wärmeverteilung durchgeführt wird.

Das erfindungsgemäße System zur Ausnutzung der in der Luft einer arbeitenden Grube enthaltenen Niedrigetmperaturwärmeenergie besteht aus Schleppschächten und Wetterquerschlägen, die mit dem Abwetterschacht verbunden sind, an welchen über Leitungen der Wärmeverbraucher über eine Wärmepumpe, einen Wärmeakkumulationsspeicher und eine Wärmeverteilung angeschlossen ist.

Der wichtigste Vorteil der Erfindung besteht in der wesentlichen Senkung der Kosten der Energiegewinnung für Heizzwecke durch Ausnutzung der in der Abluft aus dem Wettersystem einer arbeitenden Grube enthaltenen Wärme. Die Menge dieser Luft mit einer Temperatur von 298 K und höher sowie die darin enthaltene Wärmeenergie ist variabel und hängt von der Tiefe der Grube und der Gasanfälligkeit der Grube ab. Diese Menge beträgt $(7 : 12)$ xn bzw. $(1 : 39)$ x T m$^3$ pro Minute, wobei n für die Anzahl der unter Tage arbeitenden Personen auf der am stärksten belegten Arbeitsschicht steht und T die projektierte Kohleabbaumenge in Tonnen pro 24h bedeutet.

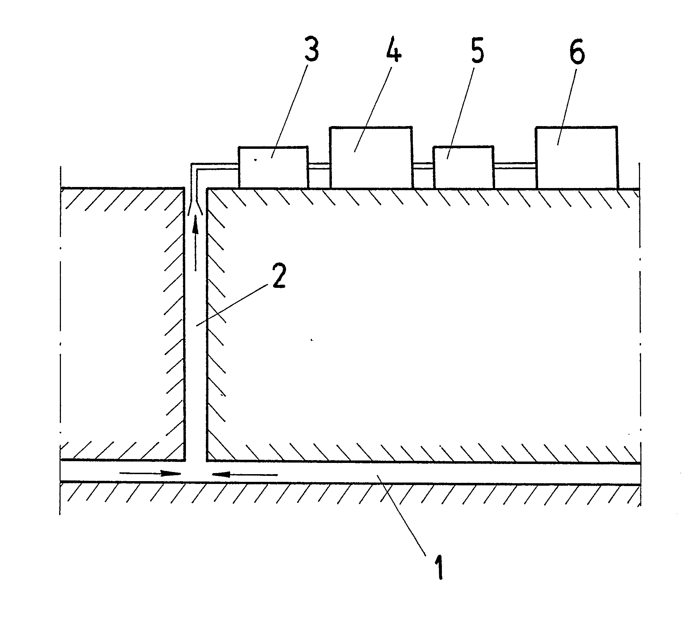

Der Erfindungsgegenstand ist als Ausführungsbeispiel in der Zeichnung dargestellt.

Die Ventilationsluft einer arbeitenden Grube, in welcher die von den Abbauräumen gewonnene Niedrigtemperaturwärmeenergie enthalten ist, wird über Schleppschächte und Wetterquerschläge 1 zum Abwetterschacht 2 geleitet und an dessen Auslauf über Tage durch die Wärmepumpe 3 samt Austauscher entnommen, in welcher die Wärmeenergieabnahme aus der Luft und derer Übertragung zum Wärmeakkumulationsspeicher 4 stattfindet. Vom Akkumulationsspeicher 4 wird die Wärmeenergie zum Verbraucher 6 über die Wärmeverteilung 5 übertragen.

Das oben beschriebene System weist den Vorteil auf, daß es keine zusätzliche Aufstellung eines zusätzlichen Teiles eines Systems in der Grube mit Schlangen zur Entnahme der Wärme aus der Umgebung der Abbauräume der Grube und mit Hochdruckrohren zum Durchfluß des Mediums, z.B. von Wasser als Träger der Wärmeenergie zur Übertragung dieser Energie auf die Oberfläche der Erde erfordert.

## Ansprüche

1. Verfahren zur Ausnutzung der in der Luft einer arbeitenden Grube enthaltenen Niedrigtemperaturwärmeenergie dadurch **gekennzeichnet,** daß die Luft über Schleppschächte und Wetterquerschläge zum Abwetterschacht der Grube geleitet wird, von dessen Auslauf die Niedrigtemperaturwärme durch eine Wärmepumpe entnommen und mit höherer Temperatur zum Verbraucher über einen Akkumulationsspeicher und eine Wärmeverteilung übertragen wird.

2. System zur Ausnutzung der in der Luft einer arbeitenden Grube enthaltenen Niedrigtemperaturwärmeenergie, **dadurch gekennzeichnet,** daß die Schleppschächte und die Wetterquerschläge (1) und der Abwetterschacht (2) mit der Wärmepumpe (3) und dem Wärmeverbraucher (6) über den Wärmeakkumulationsspeicher (4) und die Wärmeverteilung (5) verbunden sind, die über Leitungen im
geschlossenen Kreislauf verbunden sind.

EPAC-36117.1